# EUROPÄISCHE PATENTSCHRIFT

(11) **EP 2 427 732 B1**
(45) Veröffentlichungstag und Bekanntmachung des Hinweises auf die Patenterteilung: **18.07.2012**
(21) Anmeldenummer: 10703228.6
(22) Anmeldetag: 28.01.2010
(51) Int. Cl.: G01D 5/20, H01F 38/18

(54) **RESOLVER**
RESOLVER
RÉSOLVEUR

(30) Priorität: 07.05.2009 DE 102009020327
(43) Veröffentlichungstag der Anmeldung: 14.03.2012
(73) Patentinhaber: LTN Servotechnik GmbH, 83624 Otterfing (DE)
(72) Erfinder: LOGÉ, Hans, 85630 Neukeferloh (DE); HITZER, Andreas, 81549 München (DE)
(74) Vertreter: Hofmann, Ernst
(86) Internationale Anmeldenummer: PCT/EP2010/000510
(87) Internationale Veröffentlichungsnummer: WO 2010/127728

(56) Entgegenhaltungen:
- EP-A1- 0 593 351
- EP-A2- 1 302 953

## Beschreibung

Die Erfindung betrifft einen Resolver, insbesondere einen bürstenlosen Resolver, gemäß dem Anspruch 1.

Als Resolver bezeichnet man in der Elektrotechnik einen elektromagnetischen Messumformer zur Wandlung der Winkellage eines Rotors in eine elektrische Größe, bzw. in elektrische Signale. Diese Signale dienen letztlich zur Bestimmung der relativen Winkellage zwischen zwei zueinander drehbaren Baueinheiten, beispielsweise zwei zueinander drehbarer Maschinenteile. In der vorliegenden Anmeldung umfasst der Begriff Resolver auch Messumformer, die mit Synchro oder Drehmelder bezeichnet werden.

Häufig sind bei einem Resolver in einem Gehäuse versetzte Statorwicklungen angeordnet, die einen innerhalb des Gehäuses befindlichen Rotor mit Rotorwicklungen umschließen. In diesem Fall sind sowohl die Statorwicklungen als auch die Rotorwicklungen an jeweils einem Blechpaket angeordnet, welches zur Führung des magnetischen Flusses dient. Die Blechpakete bestehen aus einer Vielzahl von Einzelblechen, die in der Regel aus einem weichmagnetischen Material bestehen, damit deren elektromagnetische Wirkung gesteigert wird.

Bei bürstenlosen Resolvem wird die Rotorspannung durch eine rotierende Wicklung eines Transformators berührungslos auf eine stehende Wicklung des Transformators übertragen. Üblicherweise sind die stator- und rotorseitigen Wicklungen in jeweils einem Gehäuse des Transformators angeordnet.

Derartige Resolver werden meist in großen Stückzahlen hergestellt, so dass hier eine einfache, möglichst automatisierte Fertigung geboten ist.

Es sind Resolver bekannt, deren Gehäuse für die Wicklungen des Transformators mit Hilfe von Drehprozessen hergestellt sind. Diese bekannte Bauweise hat den Nachteil, dass durch einen vergleichsweisen geringen Wirkungsgrad des Transformators die Stromaufnahme des Resolver vergleichsweise groß ist und letztlich die Messgenauigkeit eingeschränkt ist. Zudem sind gedrehte Gehäuseteile relativ teuer in der Herstellung.

In der Offenlegungsschrift EP 1 302 953 A2 ist ein bürsten loser Resolver offenbart, bei dem ein Gehäuse für die Wicklungen des Transformators aus einem tiefgezogenen Bauteil und einem ebenen Bauteil besteht.

Ein derartiger Aufbau hat bezüglich der Messgenauigkeit Nachteile und ist überdies nur mit vergleichsweise großem Aufwand fertigbar, bzw. montierbar.

Die EP 0 593 351 A1 offenbart einen Resolver gemäβ dem Oberebegriff des Anspruchs 1.

Der Erfindung liegt daher die Aufgabe zugrunde, einen Resolver zu schaffen, welcher eine überaus hohe Messgenauigkeit aufweist und weiterhin mit minimalem Aufwand herstellbar ist.

Diese Aufgabe wird erfindungsgemäß durch die Merkmale des Anspruchs 1 gelöst.

Entsprechend umfasst der erfindungsgemäße Resolver zwei um eine Achse drehbare Baueinheiten, wobei der Resolver zur Bestimmung der relativen Winkellage zwischen den beiden Baueinheiten dient. Jede der Baueinheiten umfasst eine Wicklung, die in einem Gehäuse angeordnet ist, welches zwei Gehäuseschalen aufweist. Die Gehäuseschalen weisen Laschen auf, welche mit axialer Richtungskomponente orientiert sind und in Umfangsrichtung zueinander versetzt mit axialer Überdeckung ineinander greifend zusammengefügt sind.

Durch die erfindungsgemäße Ausgestaltung des Resolvers kann dessen Messgenauigkeit erhöht und gleichzeitig dessen Fertigungsaufwand reduziert werden.

Mit Vorteil weisen die beiden Gehäuseschalen eine identische geometrische Form auf.

In weiterer Ausgestaltung der Erfindung ist der Resolver als bürstenloser Resolver ausgebildet und die Wicklung ist einem Transformator zugeordnet.

Die Gehäuseschalen können vorteilhaft einstückig aus einem Blech geformt sein. Als Werkstoff für das Blech kann eine Eisen-Silizium Legierung verwendet werden. Weiterhin können die Gehäuseschalen durch einen Stanzprozess und einen Biegeprozess hergestellt sein.

Die Erfindung ist insbesondere von Vorteil, wenn der Resolver zwei Wicklungen aufweist, die jeweils in einem Gehäuse angeordnet sind, wobei jedes der Gehäuse zwei Gehäuseschalen umfasst. Mit anderen Worten befindet sich jede der beiden Wicklungen in jeweils einem Gehäuse. Dabei sind dann bei einem Gehäuse die Laschen am Außenumfang des Gehäuses angeordnet, während bei dem anderen Gehäuse die Laschen am Innenumfang des Gehäuses angeordnet sind. Selbstverständlich können in dem einen und /oder in dem anderen Gehäuse auch mehrere Wicklungen angeordnet sein.

Mit Vorteil weist der Resolver ein Resolvergehäuse auf und die Laschen sind so konfiguriert, dass diese in Radialrichtung federnd am Resolvergehäuse anliegen. Alternativ oder ergänzend kann der Resolver eine Welle aufweisen und die Laschen können alternativ oder ergänzend so konfiguriert sein, dass diese in Radialrichtung federnd an der Welle anliegen. Die federnde Wirkung kann erzielt werden, indem die Gehäuseschalen durch einen Biegeprozess hergestellt sind und die Laschen in einem Winkel gebogen sind, so dass diese in Radialrichtung federnd am Resolvergehäuse oder an der Welle anliegen. Insbesondere kann der Winkel zwischen zwei benachbarten Seitenwänden einer Gehäuseschale weniger als 90° betragen.

Besonders vorteilhaft im Hinblick auf die vom Resolver erzielbare Messgenauigkeit und bezüglich einer wirtschaftlichen Herstellbarkeit ist es, wenn die Gehäuseschalen bezüglich der Achse rotationssymmetrisch ausgestaltet sind.

Vorteilhafte Ausbildungen der Erfindung entnimmt man den abhängigen Ansprüchen.

Weitere Einzelheiten und Vorteile des erfindungsgemäßen Resolvers ergeben sich aus der nachfolgenden Beschreibung eines Ausführungsbeispieles anhand der beiliegenden Figuren.

Es zeigen die
- Figur 1: eine Längsschnittdarstellung eines Resolvers,
- Figur 2a: eine perspektivische Ansicht eines Blechteils zur Herstellung einer Gehäuseschale,
- Figur 2b: eine perspektivische Ansicht einer Gehäuseschale,
- Figur 2c: eine perspektivische Ansicht eines Gehäuses,
- Figur 3a: eine perspektivische Ansicht eines weiteren Blechteils zur Herstellung einer weiteren Gehäuseschale,
- Figur 3b: eine perspektivische Ansicht der weiteren Gehäuseschale,
- Figur 3c: eine perspektivische Ansicht des weiteren Gehäuses.

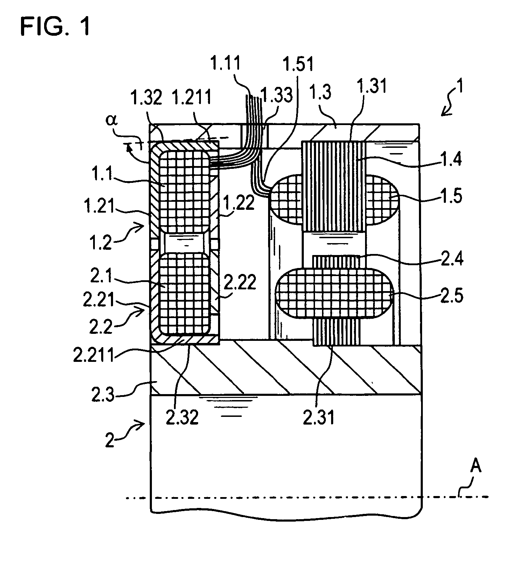

Gemäß der Figur 1 umfasst der Resolver zwei relativ um eine Achse A drehbare Baueinheiten, beispielsweise einen Stator 1 als erste Baueinheit und einen Rotor 2 als zweite Baueinheit. Der Stator 1 weist ein Resolvergehäuse 1.3 auf mit einem Bereich der als Halterung 1.31 für ein Blechpaket 1.4 dient. An diesem Blechpaket 1.4 sind Empfängerwicklungen 1.5 angeordnet. Im vorliegenden Ausführungsbeispiel sind zwei um 90° versetzte Empfängerwicklungen 1.5 vorgesehen.

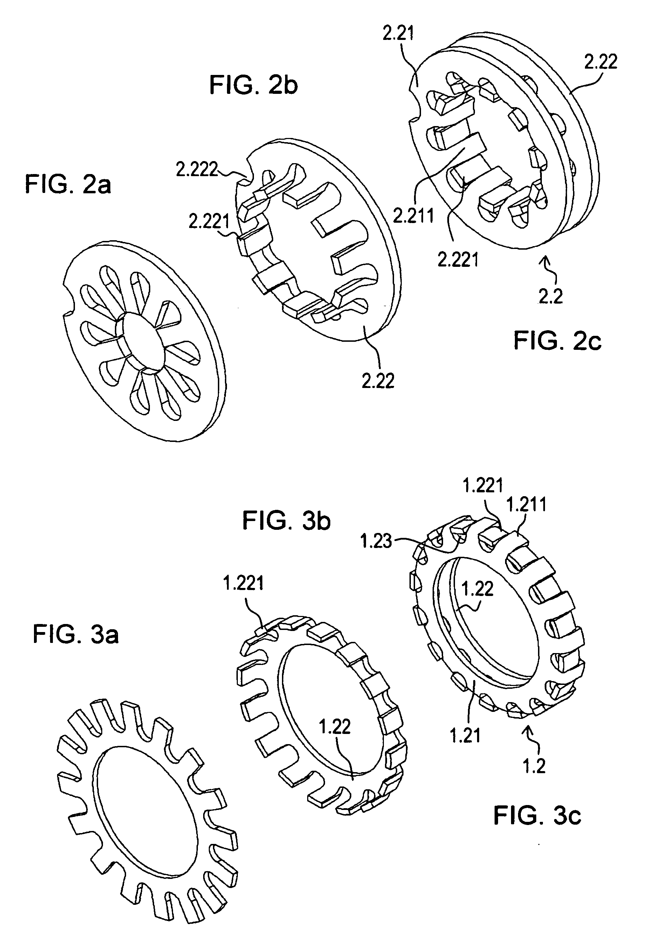

Ferner weist der Stator 1 einen Haltebereich 1.32 auf zur Aufnahme eines Transformatorteils, bestehend aus Wicklungen 1.1 und einem die Wicklungen 1.1 umgebendes Gehäuse 1.2. Das Gehäuse 1.2 umfasst zwei Gehäuseschalen 1.21, 1.22, die Laschen 1.211, 1.221 aufweisen, welche mit axialer Richtungskomponente orientiert sind und in Umfangsrichtung zueinander versetzt mit axialer Überdeckung ineinander greifend zusammengefügt sind (siehe auch die Figur 3c). Kabel 1.11, 1.51, die als elektrische Zu- bzw. Ableitungen der Wicklungen 1.1 bzw. der Empfängerwicklungen 1.5 dienen, werden gemäß der Figur 1 durch eine Bohrung 1.33 vom Inneren des Resolvergehäuses 1.3 nach außen hin geführt. Dabei verlassen die Kabel 1.11 der Wicklungen 1.1 das Gehäuse 1.2 durch eine oder mehrere Hohlkehlen 1.23 zwischen den Laschen 1.221, 1.211 (Figur 3c), die durch die spezielle Geometrie der Gehäuseschalen 1.21, 1.22 entstehen.

Der Rotor 2 weist gemäß der Figur 1 eine Welle 2.3 auf, an der ein Haltebereich 2.32 hergestellt ist, der zur Aufnahme eines rotorseitigen Transformatorteils, welches Wicklungen 2.1 und ein die Wicklungen 2.1 umgebendes Gehäuse 2.2 umfasst. Auch das rotorseitige Gehäuse 2.2 besteht aus zwei Gehäuseschalen 2.21, 2.22, die ebenfalls Laschen 2.211, 2.221 aufweisen, welche mit axialer Richtungskomponente orientiert sind und in Umfangsrichtung zueinander versetzt mit axialer Überdeckung ineinander greifend zusammengefügt sind (siehe auch Figur 2c).

In den Figuren 2a bis 2c ist der Aufbau des rotorseitigen Gehäuses 2.2 dargestellt. Zunächst wird gemäß der Figur 2a ein im Wesentlichen ringförmiges Blechteil mit entsprechenden Ausnehmungen mit Hilfe eines Stanzprozesses aus einem Halbzeug abgetrennt. Das Halbzeug kann beispielsweise ein FeSi-Blechmaterial sein. Eine der Ausnehmungen 2.222, die etwa halbkreisförmig ausgestaltet ist und am Außenumfang des Blechteils angeordnet ist, dient im montierten Resolver als Kabeldurchführung.

Im Zuge des weiteren Fertigungsprozesses werden darauffolgend die Laschen 2.221 durch Anwendung eines Biegeprozess hergestellt. Auf diese Weise entsteht aus einem einstückigen Blechteil die Gehäuseschale 2.22 gemäß der Figur 2b, deren Laschen 2.211, 2.221 am Innenumfang des Gehäuses 2.2 angeordnet sind. Die andere Gehäuseschale 2.21 des rotorseitigen Gehäuses 2.2 weist eine identische geometrische Form wie die Gehäuseschale 2.22 auf und wird entsprechend mit demselben Stanzwerkzeug und demselben Biegewerkzeug hergestellt.

In der Figur 2c sind die beiden Gehäuseschalen 2.21, 2.22 zur Veranschaulichung der Konfiguration des rotorseitigen Gehäuses 2.2 gezeigt, wobei die Laschen 2.211, 2.221, welche mit axialer Richtungskomponente orientiert sind, in Umfangsrichtung zueinander versetzt mit axialer Überdeckung ineinander greifend zusammengefügt sind.

In den Figuren 3a bis 3c ist der Aufbau des statorseitigen Gehäuses 1.2 gezeigt. Das statorseitige Gehäuse 1.2 hat einen größeren Außendurchmesser als das rotorseitige Gehäuse 2.2 und wird aus einem einstückigen Blechteil gemäß der Figur 3a mit am Außenumfang angeordneten Zähnen gefertigt. Die Fertigungsschritte entsprechen denen des rotorseitigen Gehäuses 2.2, wobei hier selbstredend im Vergleich zum rotorseitigen Gehäuse 2.2 andere Werkzeuge zum Einsatz kommen. Die so hergestellten Gehäuseschalen 1.21, 1.22 weisen Laschen 1.211, 1.221 auf, die am Außenumfang des Gehäuses 1.2 angeordnet sind (Figur 3b). Zudem sind die beiden statorseitigen Gehäuseschalen 1.21, 1.22 streng rotationssymmetrisch ausgestaltet und weisen insbesondere keine explizite Ausnehmung für eine spätere Durchführung der Kabel 1.11 auf. Wie bereits oben beschrieben, werden die durch das Zusammenfügen der beiden Gehäuseschalen 1.21, 1.22 gemäß der Figur 3c entstehenden Hohlkehlen 1.23 zwischen den Gehäuseschalen 1.21, 1.22 bzw. zwischen den Laschen 1.211, 1.221 als Durchtritt für die Kabel 1.1 verwendet.

Bei der Herstellung beider Gehäuse 1.2, 2.2 werden die Laschen 1.211, 1.221, 2.211, 2.221 in einer Weise gebogen, dass diese in Radialrichtung federnd am Resolvergehäuse 1.3 bzw. an der Welle 2.3 anliegen. Zu diesem Zweck werden die Laschen 1.211, 1.221; 2.211, 2.221 in einem Winkel α gebogen, der kleiner als 90° ist. In der Figur 1 ist beispielhaft für die statorseitige Gehäuseschalen 1.21 der Winkel α durch die gestrichelte Linie gezeigt.

Bei der Montage der Transformatorteile werden also zunächst die Gehäuseschalen 1.21, 2.21, wie oben beschreiben, hergestellt. Jeweils eine der Gehäuseschalen 1.21, 2.21 wird dann entsprechend mit einer der Wicklungen 1.1, 2.1 bestückt. Danach wird durch Aufstecken der zugehörigen zweiten identischen Gehäuseschale 1.21, 2.21 das jeweilige Gehäuse 1.2, 2.2 geschlossen. Nun kann beispielsweise zunächst das statorseitige Gehäuse 1.2 in den Haltebereich 1.32 des Resolvergehäuses 1.3 unter elastischer radial nach innen gerichteter Verformung der Laschen 1.211, 1.221 eingefügt werden. Analog dazu wird das rotorseitige Gehäuse 2.2 am Haltebereich 2.32 der Welle 2.3 montiert, wobei hier die Laschen 2.211, 2.221 radial nach au-βen elastisch verformt werden. Sichefieitshalber können die Gehäuse 1.2, 2.2 noch am Resolvergehäuse 1.3 bzw. an der Welle 2.3 befestigt, beispielsweise verklebt, werden.

Im gezeigten Ausführungsbeispiel ist die Welle 2.3 als eine Hohlwelle ausgestaltet, in welcher eine Motorwelle, deren Winkellage zu bestimmen ist, drehfest fixiert werden kann. An einer Halterung 2.31 der Welle 2.3 ist ein Blechpaket 2.4 mit Sendewicklungen 2.5 angeordnet. Üblicherweise werden die Sendewicklungen 2.5 samt Blechpaket 2.4 nach dem Zusammenbau des Rotors 2 mit einer Vergussmasse vergossen. Die Vergussmasse ist der Übersichtlichkeit halber nicht in der Figur 1 dargestellt.

Im Übrigen sind im vorgestellten Ausführungsbeispiel sowohl die Wicklungen 1.1, 2.1 des Transformators als auch die Empfängerwicklungen 1.5 und die Sendewicklungen 2.5 aus Kupferdraht hergestellt.

Durch einen entsprechenden Resolver kann die relative Winkellage zwischen dem Stator 1 und dem Rotor 2 bestimmt werden. Zu diesem Zweck werden die Wicklungen 1.1 des Stators 1 mit einem sinusförmigen Wechselstrom beaufschlagt, was zur Folge hat, dass in die Wicklungen 2.1 des Rotors 2 eine Wechselspannung mit einem vorgegebenen Transformationsverhältnis induziert wird. Diese Wechselspannung wird damit auch an die Sendewicklungen 2.5 des Rotors 2 angelegt, so dass in den Empfängerwicklungen 1.5 des Stators 1, welche die Sendewicklungen 2.5 des Rotors 2 umschließen, entsprechende Ausgangsspannungen induziert werden. Bei der Verwendung von zwei um 90° versetzten Empfängerwicklungen 1.5 des Stators 1 können dann zwei um 90° phasenversetzte Spannungssignale abgegriffen werden, die von der relativen Winkellage zwischen Stator 1 und Rotor 2 abhängen. Der vorliegende Resolver ist demnach als ein bürsten- oder schleifringloser Resolver ausgestaltet.

Es hat sich gezeigt, dass Resolver mit den neuen Gehäusen 1.2, 2.2 eine vergleichsweise hohe Messgenauigkeit erreichen. Dies mag zum einen daran liegen, dass durch die symmetrische Ausgestaltung der Gehäuse 1.2, 2.2, die zudem aus identischen Gehäuseschalen 1.21, 1.22, 2.21, 2.22 bestehen, sehr hohe homogene Streufelder erzeugbar sind, was sich positiv auf die Messgenauigkeit auswirkt. Da beim statorseitigen Gehäuse 1.2 u. a. durch die Vermeidung von Aussparungen für die Kabel 1.11 vollkommen rotationssymmetrische Gehäuseschalen 1.21, 1.22 verwendet werden, wird hier ein überaus genaues Messergebnis erreicht.

In diesem Zusammenhang hat es sich gezeigt, dass statt der jeweils runden Geometrie eines Nutgrunds der Gehäuseschalen 1.21, 1.22 eine rechtwinklige Gestaltung des Nutgrunds im Hinblick auf Streufelder und elektromagentischer Verträglichkeit gegenüber äußeren Feldern vorteilhaft sein kann. Bei einer derartigen Ausgestaltung der Gehäuseschalen 1.21, 1.22 sind also die Ausnehmungen zwischen den Laschen 1.211, 1.221 vor dem Biegeprozess im Wesentlichen rechteck- oder trapezförming, jeweils mit einer radial nach außen hin offenen Seite. Gegebenenfalls können bei dieser Bauweise aber diejenigen (wenigen) Hohlkehlen 1.23, die für den Durchtritt der Kabel 1.11 der Wicklungen 1.1 vorgesehen sind nach wie vor durch eine halbrunde Geometrie des betreffenden Nutgrundes definiert werden.

Weiterhin trägt auch die zentrierende Wirkung der radial federnden Laschen 1.211, 1.221, 2.211, 2.221 zur Erhöhung der Messgenauigkeit des Resolvers bei, denn radiale Abweichungen von der optimalen Lage der Transformatorteile führen zu Messungenauigkeiten.

Zudem wird konstruktionsbedingt die Messgenauigkeit des neuen Resolvers auch dadurch erhöht, dass die Laschen 1.211, 1.221; 2.211, 2.221 in Umfangsrichtung zueinander versetzt mit axialer Überdeckung ineinander greifend zusammengefügt sind. Es kann somit eine relativ große Kontaktfläche zwischen den Gehäuseteilen 1.21, 1.22; 2.21, 2.22 erreicht werden. Dies hat wiederum eine Erhöhung der Messgenauigkeit des Resolvers zur Folge, da der magnetische Widerstand nun konstruktionsbedingt zwischen den jeweiligen Gehäuseteilen 1.21, 1.22; 2.21, 2.22 relativ klein ist. Andererseits wird durch das bloße Zusammenfügen der gestanzten Laschen 1.211, 1.221; 2.211, 2.221 kein guter elektrischer Kontakt zwischen den Gehäuseteilen 1.21, 1.22; 2.21, 2.22 hergestellt. Entsprechend erzeugen die sich berührenden Laschen 1.211, 1.221; 2.211, 2.221 an den Fügelinien einen vergleichsweise großen Widerstand für Wirbelströme. Insbesondere ist bei dieser Betrachtung zu berücksichtigen, dass derartige Wirbelströme tangential im Blech der Gehäuseteile 1.21, 1.22; 2.21, 2.22 verlaufen. Die neue Konstruktion bewirkt, dass gerade die Ausbildung tangentialer Wirbelströme stark vermindert wird und somit der Wirkungsgrad des Transformators erhöht ist.

Durch die Erfindung kann also ein Resolver geschaffen werden, der im Hinblick auf die Messgenauigkeit höchsten Anforderungen entspricht und gleichzeitig überaus wirtschaftlich herstellbar ist.

## Patentansprüche

1. Resolver umfassend zwei um eine Achse (A) drehbare Baueinheiten (1; 2), wobei der Resolver zur Bestimmung der relativen Winkellage zwischen den beiden Baueinheiten (1; 2) geeignet ist, und jede der Baueinheiten (1; 2) eine Wicklung (1.1; 2.1) umfasst, die jeweils in einem Gehäuse (1.2; 2.2) angeordnet ist, welches zwei Gehäuseschalen (1.21, 1.22; 2.21, 2.22) aufweist,
**dadurch gekennzeichnet, dass**
die Gehäuseschalen (1.21, 1.22; 2.21, 2.22) Laschen (1.211, 1.221; 2.211, 2.221) aufweisen, welche mit axialer Richtungskomponente orientiert sind und in Umfangsrichtung zueinander versetzt mit axialer Überdeckung ineinander greifend zusammengefügt sind.

2. Resolver gemäß dem Anspruch 1, **dadurch gekennzeichnet, dass** die beiden Gehäuseschalen (1.21, 1.22; 2.21, 2.22) eine identische geometrische Form aufweisen.

3. Resolver gemäß dem Anspruch 1 oder 2, **dadurch gekennzeichnet, dass** der Resolver als bürstenloser Resolver ausgebildet ist und die Wicklung (1.1; 2.1) einem Transformator zugeordnet ist.

4. Resolver gemäß einem der vorhergehenden Ansprüche, **dadurch gekennzeichnet, dass** die Gehäuseschalen (1.21, 1.22; 2.21, 2.22) einstückig aus einem Blechteil geformt sind.

5. Resolver gemäß einem der vorhergehenden Ansprüche, **dadurch gekennzeichnet, dass** die Gehäuseschalen (1.21, 1.22; 2.21, 2.22) durch einen Stanzprozess und einen Biegeprozess hergestellt sind.

6. Resolver gemäß einem der vorhergehenden Ansprüche, **dadurch gekennzeichnet, dass** der Resolver zwei Wicklungen (1.1; 2.1) in jeweils einem Gehäuse (1.2; 2.2) mit jeweils zwei Gehäuseschalen (1.21, 1.22; 2.21, 2.22) umfasst, wobei bei einem Gehäuse (1.2) die Laschen (1.211, 1.221) am Außenumfang des Gehäuses (1.2) angeordnet sind, während bei dem anderen Gehäuse (2.2) die Laschen (2.211, 2.221) am Innenumfang des Gehäuses (2.2) angeordnet sind.

7. Resolver gemäß einem der vorhergehenden Ansprüche, **dadurch gekennzeichnet, dass** der Resolver ein Resolvergehäuse (1.3) aufweist und die Laschen (1.211, 1.221) so konfiguriert sind, dass diese in Radialrichtung federnd am Resolvergehäuse (1.3) anliegen.

8. Resolver gemäß einem der vorhergehenden Ansprüche, **dadurch gekennzeichnet, dass** der Resolver eine Welle (2.3) aufweist und die Laschen (2.211, 2.221) so konfiguriert sind, dass diese in Radialrichtung federnd an der Welle (2.3) anliegen.

9. Resolver gemäß einem der Ansprüche 6 oder 7, **dadurch gekennzeichnet, dass** die Gehäuseschalen (1.21, 1.22; 2.21, 2.22) durch einen Biegeprozess hergestellt sind und die Laschen (1.211, 1.221; 2.211, 2.221) in einem Winkel (α) gebogen sind, so dass diese in Radialrichtung federnd am Resolvergehäuse (1.3) oder an der Welle (2.3) anliegen.

10. Resolver gemäß einem der vorhergehenden Ansprüche, **dadurch gekennzeichnet, dass** die Gehäuseschalen (1.21, 1.22) bezüglich der Achse (A) rotationssymmetrisch ausgestaltet sind.

## Claims

1. Resolver comprising two structural units (1; 2) that are rotatable about an axis (A), wherein the resolver is suitable for determining the relative angular position between the two structural units (1; 2), and each of the structural units (1; 2) has a winding (1.1; 2.1) which is arranged in each case in a housing (1.2; 2.2) which has two housing shells (1.21, 1.22; 2.21, 2.22), **characterized in that** the housing shells (1.21, 1.22; 2.21, 2.22) have lugs (1.211, 1.221; 2.211, 2.221) which are oriented with an axial directional component and are joined together in a manner offset from one another in the circumferential direction and engaging in one another with axial overlap.

2. Resolver according to Claim 1, **characterized in that** the two housing shells (1.21, 1.22; 2.21, 2.22) have an identical geometric shape.

3. Resolver according to Claim 1 or 2, **characterized in that** the resolver is in the form of a brushless resolver and the winding (1.1; 2.1) is assigned to a transformer.

4. Resolver according to one of the preceding claims, **characterized in that** the housing shells (1.21, 1.22; 2.21, 2.22) are formed integrally from a sheet metal part.

5. Resolver according to one of the preceding claims, **characterized in that** the housing shells (1.21, 1.22; 2.21, 2.22) are produced by a stamping process and a bending process.

6. Resolver according to one of the preceding claims, **characterized in that** the resolver comprises two windings (1.1; 2.1) in in each case one housing (1.2; 2.2) having in each case two housing shells (1.21, 1.22; 2.21, 2.22), wherein in one housing (1.2) the lugs (1.211, 1.221) are arranged on the outer circumference of the housing (1.2), while in the other housing (2.2) the lugs (2.211, 2.221) are arranged on the inner circumference of the housing (2.2).

7. Resolver according to one of the preceding claims, **characterized in that** the resolver has a resolver housing (1.3) and the lugs (1.211, 1.221) are configured such that they butt in a resilient manner against the resolver housing (1.3) in the radial direction.

8. Resolver according to one of the preceding claims, **characterized in that** the resolver has a shaft (2.3) and the lugs (2.211, 2.221) are configured such that they butt in a resilient manner against the shaft (2.3) in the radial direction.

9. Resolver according to either of Claims 6 and 7, **characterized in that** the housing shells (1.21, 1.22; 2.21, 2.22) are produced by a bending process and the lugs (1.211, 1.221; 2.211, 2.221) are bent at an angle (α) such that they butt in a resilient manner against the resolver housing (1.3) or against the shaft (2.3) in the radial direction.

10. Resolver according to one of the preceding claims, **characterized in that** the housing shells (1.21, 1.22) are configured in a rotationally symmetrical manner with respect to the axis (A).

## Revendications

1. Résolveur comprenant deux unités structurelles (1
; 2) pouvant tourner autour d'un axe (A), le résolveur étant approprié pour déterminer la position angulaire relative entre les deux unités structurelles (1 ; 2), et chacune des unités structurelles (1 ; 2) comprenant un bobinage (1.1 ; 2.1) qui est disposé à chaque fois dans un boîtier (1.2, 2.2) qui présente deux coques de boîtier (1.21, 1.22 ; 2.21, 2.22),
**caractérisé en ce que**
les coques de boîtier (1.21, 1.22 ; 2.21, 2.22) présentent des langues (1.211, 1.221 ; 2.211, 2.221) qui sont orientées avec une composante directionnelle axiale et qui sont assemblées en venant en prise les unes dans les autres avec un recouvrement axial de manière décalée les unes par rapport aux autres dans la direction périphérique.

2. Résolveur selon la revendication 1, **caractérisé en ce que** les deux coques de boîtier (1.21, 1.22 ; 2.21, 2.22) présentent une forme géométrique identique.

3. Résolveur selon la revendication 1 ou 2, **caractérisé en ce que** le résolveur est réalisé sous forme de résolveur sans balais, et le bobinage (1.1 ; 2.1) est associé à un transformateur.

4. Résolveur selon l'une quelconque des revendications précédentes, **caractérisé en ce que** les coques de boîtier (1.21, 1.22 ; 2.21, 2.22) sont formées d'une seule pièce à partir d'une pièce de tôle.

5. Résolveur selon l'une quelconque des revendications précédentes, **caractérisé en ce que** les coques de boîtier (1.21, 1.22 ; 2.21, 2.22) sont fabriquées par un processus d'estampage et un processus de cintrage.

6. Résolveur selon l'une quelconque des revendications précédentes, **caractérisé en ce que** le résolveur comprend deux bobinages (1.1 ; 2.1) dans un boîtier respectif (1.2 ; 2.2) ayant à chaque fois deux coques de boîtier (1.21, 1.22 ; 2.21, 2.22), les langues (1.211, 1.221) étant disposées dans le cas d'un boîtier (1.2) sur la périphérie extérieure du boîtier (1.2), tandis que dans le cas de l'autre boîtier (2.2), les langues (2.211, 2.221) sont disposées sur la périphérie intérieure du boîtier (2.2).

7. Résolveur selon l'une quelconque des revendications précédentes, **caractérisé en ce que** le résolveur présente un boîtier de résolveur (1.3) et les langues (1.211, 1.221) sont configurées de telle sorte qu'elles s'appliquent dans la direction radiale de manière élastique sur le boîtier de résolveur (1.3).

8. Résolveur selon l'une quelconque des revendications précédentes, **caractérisé en ce que** le résolveur présente un arbre (2.3) et les langues (2.211, 2.221) sont configurées de telle sorte qu'elles s'appliquent de manière élastique contre l'arbre (2.3) dans la direction radiale.

9. Résolveur selon l'une quelconque des revendications 6 ou 7, **caractérisé en ce que** les coques de boîtier (1.21, 1.22 ; 2.21, 2.22) sont fabriquées par un processus de cintrage et les langues (1.211, 1.221 ; 2.211, 2.221) sont cintrées suivant un angle (α) de telle sorte que celles-ci s'appliquent dans la direction radiale de manière élastique contre le boîtier de résolveur (1.3) ou contre l'arbre (2.3).

10. Résolveur selon l'une quelconque des revendications précédentes, **caractérisé en ce que** les coques de boîtier (1.21, 1.22) sont configurées avec une symétrie de révolution par rapport à l'axe (A).
